# EUROPÄISCHE PATENTSCHRIFT

(11) **EP 2 240 310 B1**
(45) Veröffentlichungstag und Bekanntmachung des Hinweises auf die Patenterteilung: **03.08.2011**
(21) Anmeldenummer: 08708718.5
(22) Anmeldetag: 05.02.2008
(51) Int. Cl.: B29C 49/58, B29C 49/12

(54) **VORRICHTUNG ZUM EINBLASEN VON DRUCKLUFT IN EINE BLASFORM**
DEVICE FOR INJECTING COMPRESSED AIR INTO A BLOW MOLD
DISPOSITIF POUR INSUFFLER DE L AIR COMPRIMÉ DANS UN MOULE DE SOUFFLAGE

(43) Veröffentlichungstag der Anmeldung: 20.10.2010
(73) Patentinhaber: Eugen Seitz AG, 8623 Wetzikon (CH)
(72) Erfinder: RYMANN, Othmar, CH-8362 Balterswil (CH)
(74) Vertreter: EGLI-EUROPEAN PATENT ATTORNEYS
(86) Internationale Anmeldenummer: PCT/EP2008/051421
(87) Internationale Veröffentlichungsnummer: WO 2009/097897

(56) Entgegenhaltungen:
- WO-A-02/24435
- WO-A-2006/108382
- DE-A1- 1 561 985
- DE-A1- 10 063 553
- FR-A- 2 336 302

## Beschreibung

Die vorliegende Erfindung betrifft eine Vorrichtung nach dem Oberbegriff von Anspruch 1 sowie eine Blaseinheit mit einer derartigen Vorrichtung.

Für die Herstellung von Kunststoffflaschen, insbesondere von PP-Flaschen und von PET-Flaschen, wird ein Rohling oder Vorformling in einer Hohlkörperblasmaschine in der Regel in zwei Schritten in seine endgültige Form aufgeblasen. Hierfür weist der Rohling bereits im Wesentlichen den fertigen Flaschenkopf auf, welcher in der Blasform der Hohlkörperblasmaschine gehalten und über einen Blaszylinder mit einem Druckluftsystem verbunden wird. Durch Einblasen von Druckluft durch den Flaschenkopf wird der Rohling aufgeblasen und schliesslich in seine endgültige Form gebracht.

Dieser Blasprozess wird üblicherweise in einem zweistufigen Verfahren ausgeführt, wobei als erste Stufe ein Vorblasen mit einem Druckwert zwischen 2 bis 20 bar über ein Vorblasventil erfolgt, und danach in einer zweiten Stufe das Endblasen, d.h. das Formen der Kunststoffflasche zu ihrer Endform, mit einem Druckwert zwischen 15 bis 40 bar über ein Hauptblasventil erfolgt. Diese beiden Ventile sind jeweils mit einer Druckquelle des Druckluftsystems mit dem der entsprechenden Verfahrensstufe entsprechenden Druckpotential verbunden.

Um eine wirtschaftliche Produktion zu gewährleisten müssen diese Prozesse so rasch als möglich ablaufen. Hierfür wird herkömmlicherweise eine Ventilanordnung bestehend aus zwei Ventilen, einem Vorblasventil und einem Blasventil verwendet welche beispielsweise auf einem gemeinsamen Block angeordnet sind.

Anschliessend an diese beiden Blasstufen muss die Verbindung zu den Druckquellen unterbrochen und der Druck aus der Kunststoffflasche und aus den Zuführkanälen abgelassen werden, bevor die Kunststoffflasche von der mit dem Blaszylinder verbundenen Blasform entfernt werden kann. Dieser Prozessschritt wird auch als Entlüftung bezeichnet.

Zur Unterstützung des Blasvorganges wird herkömmlicherweise ein Streckdorn eingesetzt, welcher axial verschiebbar im Blaszylinder angeordnet ist und beim Blasprozess in den Rohling resp. die Kunststoffflasche hineingeschoben wird. Dieser Streckdorn wird von einem zusätzlichen Antrieb, häufig pneumatisch oder elektrisch, angetrieben. Dabei bewegt sich der Streckdorn von einer Ausgangsposition innerhalb des Blaszylinders in einem ersten Abschnitt in Richtung des Rohlings, durch dessen Kopf hindurch bis zu dessen Boden und danach in einem zweiten Abschnitt zusammen mit dem Einblasen der Blasluft mit dem Boden bis zur endgültigen Position des Bodens der Kunststoffflasche relativ zum Blaszylinder. Während der Entlüftungsphase wird der Streckdorn wieder zurück in seine Ausgangsposition zurückgezogen.

Die beiden genannten Abschnitte werden entweder in einer Sequenz durchfahren oder aufgeteilt in zwei Sequenzen entsprechend den geschilderten Abschnitten.

Der Blaszylinder weist als Austrittsöffnung eine sogenannte Blasdüse auf, welche mit dem Kopf des Rohlings dicht in Verbindung gebracht werden muss. Hierfür ist die Blasdüse herkömmlicherweise an einer im Blaszylinder koaxial zum Streckdorn verschiebbar angeordneten Hohlwelle angeordnet. Die untere Seite dient dabei als Dichtfläche gegen den Rohling resp. den Kopf des Rohlings. Die Hohlwelle wird dabei mittels eines radial nach Aussen abstehenden Flansches, welcher als doppelt wirkender Ringkolben dient, über entsprechend ausgebildete Druckkammern innerhalb des Blaszylinders pneumatisch angetrieben resp. bewegt. Zum Blaszylinder hin weist der Kopf häufig einen Dämpfungsring auf, welcher beim Zurückziehen der Hohlwelle am Ende der Entlüftungsphase als Anschlag dient und dabei die ganze Masse der Hohlwelle abfedern muss. Dieser Dämpfungsring wird üblicherweise an der Aussenseite der Hohlwelle angeordnet und ist damit von Aussen zu Inspektionszwecken sichtbar.

Durch diese Anordnung des Flansches resp. Ringkolbens der Hohlwelle weist der Blaszylinder im Bereich des Ringkolbens radial ein grosses Gehäuse auf, dass durch die in axialer Richtung verteilten unterschiedlichen Durchmesser in der Bearbeitung sehr aufwändig ist, was mit hohen Herstellungskosten verbunden ist. Auch ist der Blaszylinder damit in seiner axialen Richtung stark abgestuft und weist einen verhältnismässig hohen Platzbedarf auf. Weiter ist insbesondere die Bewegung resp. der obere Endanschlag der Hohlwelle im Blaszylinder nur sehr schlecht abzudämpfen, was sich negativ auf die Lebensdauer des Dämpfungsringes auswirkt und auch die effektive Arbeitsgeschwindigkeit limitiert.

Die deutsche Offenlegungsschrift DE 1 561 985 zeigt eine Vorrichtung zum Herstellen von Packungen aus thermoplastischem Kunststoff, mit einer Hülse 20 und einem darin verlaufenden Stange 45. Zum Verschieben der Hülse 20 ist ein dazu achsparallel angeordneter Arbeitszylinder 48 vorgesehen, dessen Kobenstange 49 an deren oberen Ende angreift.

Die Aufgabe der vorliegenden Erfindung bestand nun darin, einen derartigen Blaszylinder zu finden, bei welchem die Hohlwelle einfacher und platzsparender angetrieben wird.

Diese Aufgabe wird erfindungsgemäss durch eine Vorrichtung mit den Merkmalen nach Anspruch 1 gelöst. Weitere erfindungsgemässe Ausführungsformen ergeben sich aus den Merkmalen der weiteren Ansprüche 2 bis 10.

Bei einer Vorrichtung zum Einblasen von Druckluft in einen Formling mit einem Blaszylinder, mit innerhalb des Gehäuses des Blaszylinders entlang seiner Längsachse verschiebbar angeordneter Hohlwelle, dessen eines Ende aus dem Blaszylinder herausragt und mit einem Anschlusskopf zur dichten Verbindung mit dem Formling versehen ist, mit einer koaxial zur Hohlwelle im Innern der Hohlwelle angeordnetem und koaxial zur Hohlwelle verschiebbaren Streckdorn, ist erfindungsgemäss achsparallel zur Hohlwelle ein Doppelkolben angeordnet, welcher mit einer Verbindungslasche mit der Hohlwelle verbunden ist und diese damit entlang ihrer Längsachse zwischen einer unteren und oberen Endposition bewegt. Der Antrieb der Hohlwelle wird damit nicht mehr koaxial bewirkt, sondern seitlich über eine parallel zur Längsachse der Hohlwelle angeordnete Kolbenachse. Damit wird die Funktion der Luftzuführung über die Hohlwelle und Bewegung der koaxial angeordneten Reckstange vom Antrieb der Hohlwelle getrennt. Dies führt einmal dazu, dass im Querschnitt der Platzbedarf des Blaszylinders verändert wird, indem der radiale Platzbedarf um die Hohlwelle herum verkleinert wird, da der Ringkolben wegfällt, dafür radial nur in einer Richtung ein erhöhter Platzbedarf für den Antrieb benötigt wird. Damit wird der Raumbedarf des Blaszylinders zumindest in einer Ausdehnung schlanker, was vorteilhaft für die Anordnung der Vorrichtung auf Streckblasmaschinen ist.

Erfindungsgemäss sind die beiden Wirkflächen der Doppelkolben jeweils in einer mit einer separaten Steuerleitung verbundenen Steuerkammer angeordnet, welche im Gehäuse des Blaszylinders ausgebildet sind. Die beiden Steuerkammern sind dabei vorzugsweise koaxial im Gehäuse angeordnet und weisen denselben Durchmesser auf, und können damit einfach in einem Arbeitsgang hergestellt resp. bearbeitet werden.

Beispielsweise ist der Doppelkolben aus zwei einzelnen Kolben mit jeweils einer Steuerfläche gebildet, wobei die gegenüberliegende Seite jeweils mit der Verbindungslasche verbunden ist oder in Kontakt steht. Damit können zwei identische Kolben eingesetzt werden, was sowohl die Herstellung wie auch die Montage vereinfacht.

Beispielsweise bestehen die Doppelkolben resp. die einzelnen Kolben mindestens teilweise aus Kunststoff, vorzugsweise vollständig aus Kunststoff. Damit kann der Antrieb der Hohlwelle mit zwei einfachen und kostengünstig herstellbaren Kunststoffkolben realisiert werden. Ein weiterer Vorteil besteht im verhältnismässig geringen Gewicht der Kunststoffkolben, womit auch die dynamische Masse und damit die Trägheit kleiner wird und damit effizienter und einfacher gedämpft werden kann.

Beispielsweise ist die Verbindungslasche einteilig form-und kraftschlüssig mit der Hohlwelle und/oder dem Doppellkolben resp. den Kolben verbunden. Damit wird die Bewegung der Kolben zuverlässig und präzise bei geringem Platzbedarf auf die Hohlwelle übertragen.

Beispielsweise ist die Verbindungslasche als gerades Bauteil ausgebildet und umfasst die Hohlwelle vollumfänglich, wobei die Hohlwelle zur Aufnahme der Verbindungslasche ein Aussengewinde aufweist. Das Aussengwinde lässt sich dabei einfach an der Aussenwand der Hohlwelle anbringen, die vorteilhaft aus Stangenmaterial gefertigt sein kann. Die Hohlwelle kann damit von unten in die im Gehäuse des Blaszylinders befindliche Lasche eingeschraubt werden und die Verbindung beispielsweise mittels einer Sicherungsschraube, welche durch die Verbindungslasche hindurch in die Aussenwand der Hohlwelle geführt ist, verdrehsicher fixiert werden.

Beispielsweise ist im Blaszylinder ein Stossdämpfer angeordnet, welcher gegen die Verbindungslasche in Anschlag gelangt. Da die Verbindungslasche parallel zur Hohlwelle bewegt wird, kann deren Bewegung durch eine auf die Verbindungslasche wirkende Dämpfung ebenfalls optimal gedämpft werden. Zwischen der Hohlwelle und dem Doppelkolben kann platzsparend ein wirkungsvoller hydraulischer Stossdämpfer angeordnet werden, und beispielsweise besonders wirksam zwischen der Hohlwelle und dem Doppelkolben auf die Verbindungslasche etwas in ihrer Mitte einwirken.

Beispielsweise ist der Stossdämpfer derart angeordnet und ausgelegt, dass er erst nach einer Teilhubbewegung der Hohlwelle aus der oberen Endposition gegen ihre untere Endposition innerhalb des Blaszylinders gegen die Verbindungslasche in Anschlag gelangt. In der oberen Endposition der Hohlwelle, der Ruhestellung der Hohlwelle, ist diese praktisch vollständig in den Blaszylinder eingefahren und vom Formling getrennt. In dieser Stellung kann beispielsweise ein Greifer der Streckblasmaschine zwischen Blaszylinder und Blasform hineingeführt werden und den in der Blasform befindlichen Formling oder die fertig geblasene Flasche am Flaschengewinde greifen und hineinführen resp. herausnehmen. Wenn nun für den Blasprozess die Hohlwelle nach unten in ihre Arbeitsstellung, in welcher sie mit der Blasformoberseite oder dem Flaschengewinde in dichten Anschlag gelangt, bewegt wird, kommt die Verbindungslasche erst nach einem gewissen Weg resp. Hub der Hohlwelle mit dem Dämpfer in Anschlag, d.h. der Anfang der Bewegung nach unten erfolgt ungedämpft. Dies kann vorteilhaft für sogenannte HOTFILL Anwendungen eingesetzt werden, wo der erste Hubweg möglichst schnell durchlaufen werden soll, aber vor dem Auftreffen der Unterseite der Hohlwelle auf die Oberseite des Gewindes des Formlings die Bewegung verlangsamt resp. gedämpft werden soll, da das Gewinde des Formlings bei diesem Verfahren heiss und damit weich ist. Durch das Dämpfungselement kann hier die Bewegung erst kurz vor dem Berühren des Gewindes des Formlings abgebremst werden und damit ein Verformen des Gewindes vermieden werden. Vorteilhaft kann hierfür auf ein zweites Steuerventil für den Doppelkolben verzichtet werden, wie dies bei herkömmlichen Vorrichtungen der Fall ist.

Beispielsweise ist die Verbindungslasche mit einem achsparallel zur Längsachse der Hohlwelle geführten Bolzen verbunden. Der Bolzen verhindert ein Verdrehen der Verbindungslasche, und damit insbesondere ein Verdrehen der Hohlwelle um ihre Längsachse.

Beispielsweise weist das Gehäuse des Blaszylinders einen rechteckigen Querschnitt auf. Das Gehäuse kann damit aus einfachem Stangenmaterial hergestellt werden, was die Produktionskosten im Vergleich zu herkömmlichen Vorrichtungen senkt. Durch den Wegfall der Ringkolbenflächen an der Hohlwelle kann diese ebenfalls einfach aus Stangenmaterial hergestellt werden, was wiederum zur Senkung der Produktionskosten des Blaszylinders beiträgt.

Weiter wird erfindungsgemäss eine Blaseinheit mit einem erfindungsgemässen Blaszylinder mit einem unmittelbar an einer längeren Querschnittsseite seitlich angeordneten Blasblock und in die Stirnseite des Blasblockes mündender Speiseleitung, unmittelbar benachbart zur kürzeren Querschnittsseite des Blaszylinders im Bereich der Hohlwelle resp. des Streckdorns vorgeschlagen. Damit wird eine im Querschnitt äusserst kompakte Bauweise erzielt mit sehr kurzen Strömungswegen innerhalb der einzelnen Elemente der Blaseinheit, wodurch Leistungsverluste durch Strömungsverluste verringert oder vermieden werden.

Beispielsweise ist ein Sparventil entweder seitlich am Blasblock oder seitlich am Gehäuse des Blaszylinders angeordnet. Damit kann ein Grossteil der Arbeitsluft resp. des Arbeitdruckes rekuperiert werden.

Ausführungsbeispiele der vorliegenden Erfindung werden nachstehend anhand von Figuren noch näher erläutert. Es zeigen
Fig. 1 rein schematisch den Längsschnitt durch einen herkömmlichen Blaszylinder;
Fig. 2 schematisch den Längsschnitt durch eine erfindungsgemässe Vorrichtung in der Ruhestellung der Hohlwelle;
Fig. 3 schematisch den Längsschnitt nach Figur 2 in der Arbeitsstellung der Hohlwelle;
Fig. 4 rein schematisch die Aufsicht auf eine Blasstation ausgerüstet mit einem erfindungsgemässen Blaszylinder; und
Fig. 5 die Aufsicht auf die Lasche der erfindungsgemässen Vorrichtung nach Figur 2.

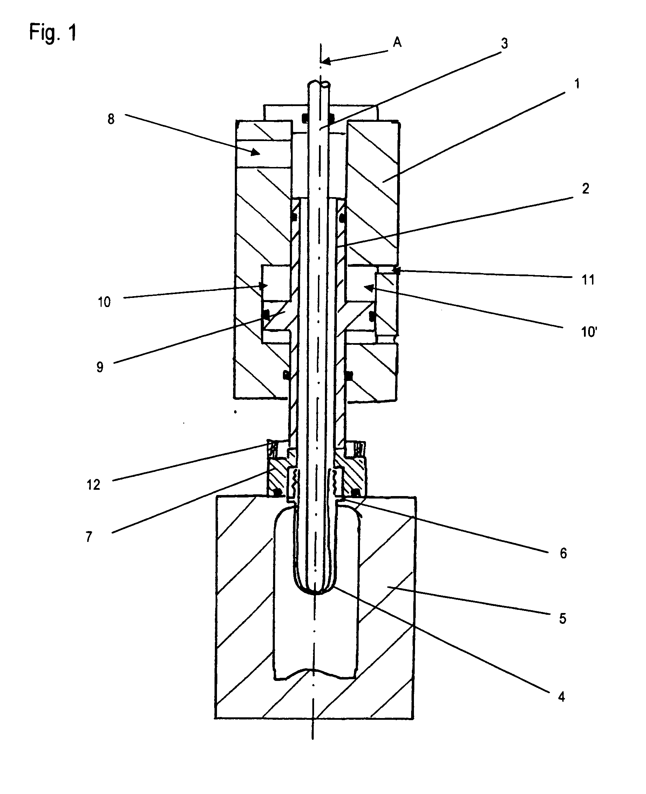

In Figur 1 ist rein schematisch der Längsschnitt durch einen herkömmlichen Blaszylinder einer Streckblasmaschine zur Herstellung beispielsweise von PET Flaschen dargestellt. Im Gehäuse 1 des Blaszylinders ist koaxial zur Hohlwelle 2 ein Reckdorn 3 angeordnet. Der Reckdorn 3 führt oben zum Gehäuse 1 heraus zum separaten Antrieb (nicht dargestellt) der Reckdorn 3. Das untere Ende der Reckdorn 3 mündet in abgesenktem Zustand in den Formling 4 der zu blasenden PET Flasche hinein, der seinerseits in der Blasform 5 über seinen Neckring 6 gehalten ist.

Die Hohlwelle 2 weist an ihrem unteren Ende eine Dichtglocke 7 auf, welche im dargestellten Beispiel in der Arbeitslage der Hohlwelle 2 mit der Oberseite der Blasform 5 in dichtem Kontakt steht. Über die Druckleitung 8 kann nun Blasluft über die Hohlwelle 2 nach unten in den Formling 4 geblasen werden und dieser entsprechend der Form der Blasform 5 zu seiner endgültigen Form aufgeblasen werden. Danach werden sowohl der Reckdorn 3 wie auch die Hohlwelle 2 nach oben in ihre Ruhestellung gezogen.

Die Hohlwelle 2 wird dabei über ihren als Ringkolben ausgebildeten Flansch 9, der in einer koaxial zur Hohlwelle 2 angeordneten Steuerkammer 10 liegt, angetrieben. Hierfür wird für die Arbeitsstellung die obere Steuerkammer 10' über die Steuerleitung 11 mit Druckluft gekoppelt und damit nach unten bewegt.

Zur Dämpfung der Bewegung in die Ruhestellung ist an der Dichtglocke 7 an ihrer zum Blaszylinder gerichteten Seite ein Dämpfring 12 angeordnet. Dieser Dämpfring 12 muss die ganze Masse der Hohlwelle 2 abdämpfen, insbesondere damit auch die Masse des Flansches 9. Aus dieser Anordnung ist ersichtlich, dass im Gehäuse 1 des Blaszylinders mehrere, unterschiedliche Durchmesser aufweisende, koaxial zur Längsachse A der Hohlwelle 2 angeordnete zylindrische Räume ausgebildet sind, deren Herstellung sehr aufwändig ist und die äusseren Dimension resp. die Querschnittsfläche des Blaszylinders massgebend vorbestimmen.

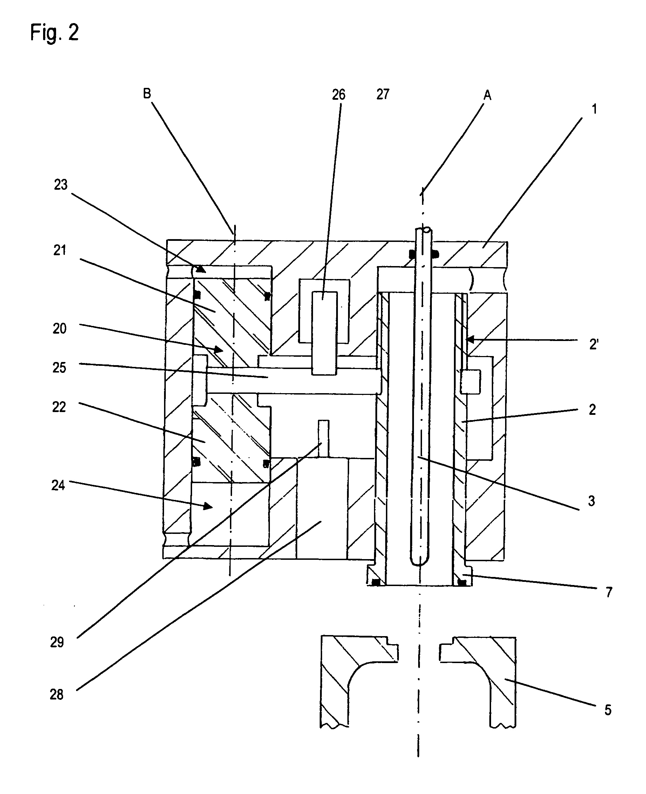

In Figur 2 ist nun ebenfalls rein schematisch der Längsschnitt durch eine erfindungsgemässe Vorrichtung dargestellt. Im Gehäuse 1 des Blaszylinders ist entlang ihrer Längsachse A verschiebbar die Hohlwelle 2 angeordnet und koaxial in ihrem Innern ebenfalls der Reckdorn 3.

Der Antrieb der Hohlwelle 2 wird nun nicht durch einen Ringflansch bewirkt, sondern durch eine Doppelkolbenanordnung 20, welche Achsparallel zur Achse A seitlich im Gehäuse 1 angeordnet ist. Beispielsweise ist sie mit einen oberen Kolben 21 und einem unteren Kolben 22 ausgebildet, welche jeweils in einem Kolbenraum 23 resp. 24 koaxial zueinander wirkend angeordnet sind und an eine Verbindungslasche 25 angreifen, welche ihrerseits mit der Hohlwelle 2 form- und kraftschlüssig verbunden ist.

In der dargestellten Ruheposition des Blaszylinders ist der Kolben 21 in seiner oberen Position und der Kolben 22 durch Druckzufuhr in den Kolbenraum 24 in seiner oberen Position, womit der Hohlzylinder in seiner oberen Ruheposition gehalten ist. Damit ist Dichtglocke 7 von der Blasform 5 abgehoben positioniert.

Die Dichtglocke 7 ist beispielsweise wie herkömmlich bekannt als Austauschteil mit der Hohlwelle 2 lösbar verbunden und weist an ihrer Unterseite Dichtungen zum Anschlag gegen die Oberseite der Blasform 5 auf. Die Dichtglocke 7 kann auch zum Anschlag gegen den Neckring (nicht dargestellt) des in der Blasform 5 gehaltenen Formlings (nicht dargestellt) ausgebildet sein.

Die verbindungslasche 25 ist beispielsweise über ein Gewinde 2' in der Aussenwand der Hohlwelle 2 mit dieser verschraubt und damit form-.und kraftschlüssig verbunden. Das Gewinde 2' ist als Aussengewinde fertigungstechnisch einfach an der Hohlwelle 2 anzubringen, welche vorteilhaft aus Stangenmaterial gefertigt sein kann, da keine nach Aussen abragenden Flansche ausgebildet werden müssen.

Ein Verdrehen der Verbindungslasche 25 um die Längsachse A der Hohlwelle 2 wird durch den Bolzen 26 verhindert, der über eine Führung 27 im Gehäuse 1 des Blaszylinders geführt ist.

Unterhalb etwa in der Mitte der Verbindungslasche 25 ist ein hydraulisches Dämpfungselement 28 im Gehäuse 1 des Blaszylinders angeordnet. Über einen Kontaktstift 29 kann das Dämpfungselement 28 in Kontakt gelangen mit der Verbindungslasche 25 und damit die Abwärtsbewegung der Verbindungslasche 25 dämpfen. Der Kontaktstift 29 wird dabei ins Innere des Dämpfungselementes gedrückt, dessen Dämpfungscharakteristik entweder fest vorgegeben resp. eingestellt oder einstellbar ist. Wenn die Verbindungslasche 25 beispielsweise aus einem Leichmetall gefertigt ist, kann der Bolzen 26 durch die Verbindungslasche 25 hindurch geführt werden und koaxial zum Kontaktstift 29 ausgerichtet sein. Damit erfolgt der Kontakt der Spitze des Kontaktstiftes 29 nicht direkt auf die Aussenwand der Verbindungslasche 25, sondern über das untere Ende des Bolzens 26, wobei sowohl Kontaktstift 29 und Bolzen 26 aus verschleissarmen Stahl gefertigt sein können.

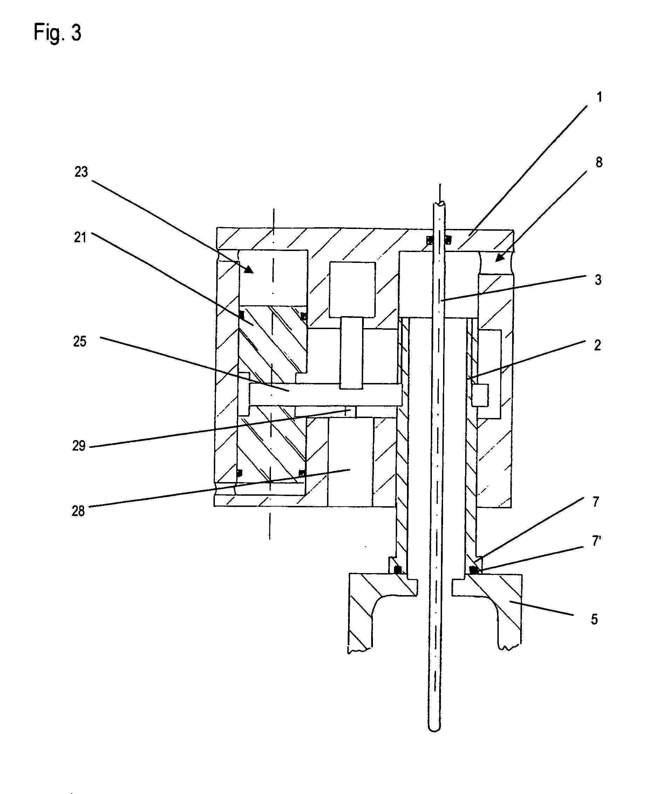

In Figur 3 ist die Hohlwelle 2 in ihrer Arbeitsstellung dargestellt, d.h. in ihrer unteren Position mit der Dichtglocke 7 im Anschlag an die Oberseite der Blasform 5. Die Dichtung wird hier durch einen Dichtring 7' realisiert, der in einer umlaufenden Nut der Dichtglocke 7 angeordnet ist.

Der Reckdorn 3 ist ebenfalls weiter nach unten abgesenkt und reicht in die Blasform 5 hinein resp. bis zum Boden des Formlings (nicht dargestellt). Die Blasluft wird über die Zuleitung 8 durch die Hohlwelle 2 hindurch ebenfalls in die Blasform 5 resp. den Formling (nicht dargestellt) geleitet und bläst diesen bis zu seiner endgültigen Form entsprechend der Form der Blasform 5 auf.

Die Bewegung der Hohlwelle 2 ist dabei durch den Kolben 21 ausgelöst worden, der auf seiner Wirkseite im Kolbenraum 23 mit einem entsprechenden Steuerdruck beaufschlagt wird und damit die Verbindungslasche 25 nach unten drückt und damit auch die Hohlwelle 2.

Durch die Bewegung nach unten kommt die Verbindungslasche 25 mit dem Kontaktstift 29 des Dämpfungselementes 28 in Kontakt und drückt diesen nach unten, womit die Dämpfungswirkung einsetzt und die Bewegung verlangsamt wird. Damit kann einerseits eine kurze Schliesszeit der Hohlwelle 2 erzielt werden, andererseits erfolgt der Schliesskontakt zwischen der Dichtglocke 7 und der Oberseite der Blasform 5 dennoch verhältnismässig sanft. Dies ist insbesondere von Vorteil, falls eine Dichtglocke 7 eingesetzt wird, welche nicht mit der Oberseite der Blasform sondern mit der Oberkante des Verschlusses des Formlings in Kontakt kommt, wie dies beim eingangs erwähnten HOTFILL Verfahren der Fall ist, bei welchem der Verschluss durch Erhitzung weich ist und durch zu starke Schliesskräfte verformt werden kanne.

Ein axiales Verdrehen der Hohlwelle 2 wird durch den im Gehäuse 1 geführten Bolzen 26 verhindert. Damit kann die Dichtglocke 7 mit einer Schraubverbindung mit der Hohlwelle 2 verbunden werden, wobei kein Gegenhalter an der Hohlwelle 2 für das Anziehen und Lösen dieser Schraubverbindung notwendig ist, sie kann allein durch Angreifen an die Dichtglocke 7 erfolgen, welche mit entsprechend formschlüssigen Angreifflächen ausgebildet ist.

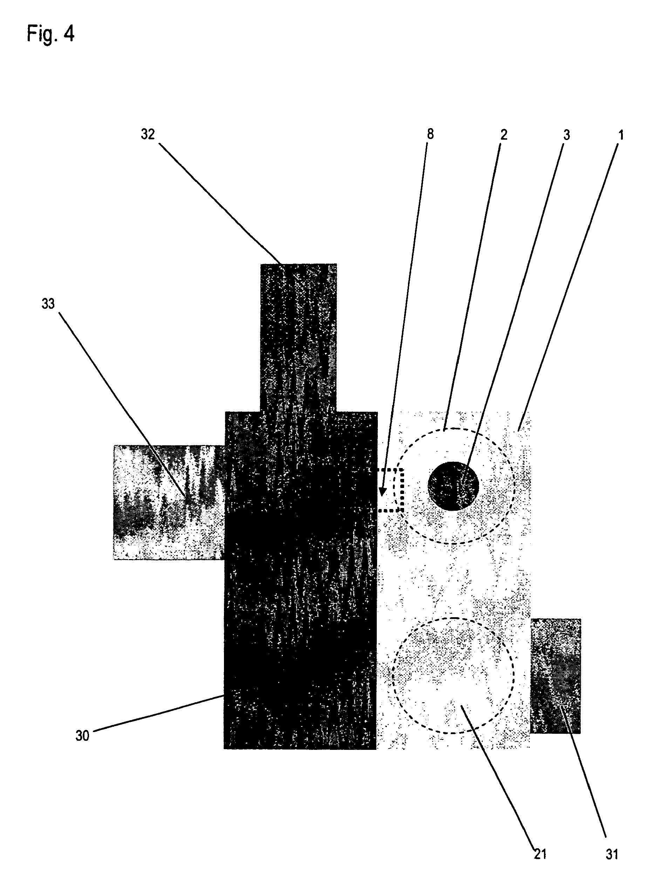

In Figur 4 ist rein schematisch die Aufsicht auf eine erfindungsgemässe Blaseinheit mit erfindungsgemässem Blaszylinder dargestellt. Das Gehäuse 1 des Blaszylinders weist dabei einen rechteckigen Querschnitt mit schmaler Front auf. Damit kann seitlich an der längeren Seite ein Blasblock 30 mit den Steuerventilen zur Steuerung der Blasluft angeordnet werden. Damit ergibt sich insgesamt ein recheckiger oder quadratischer Querschnitt, der sich optimal in die Blasstation integrieren lässt. Von der Aussenseite der Blasstation her, d.h. von der Zugriffseite von Aussen sind dabei vorteilhaft der Bereich der Steuerkolben 21 zugänglich, an dessen Seite die entsprechenden Steuerventile 31 mit kurzen Steuerleitungen angeordnet sind. Der Blasblock kann von der Maschinenseite her, in der Regel dem Zentrum des Blasrades, auf welchem die Blasstationen radial angeordnet sind, mit der Speiseleitung 32 der Blasluft verbunden werden und die Abluft und ggf. die Ableitung eines Sparventils 33 angeordnet werden. Damit können optimal kurze Speise- und Steuerleitungen realisiert werden, die den Wirkungsgrad und damit auch die Leistungsfähigkeit der gesamten Maschine steigern.

Das Sparventil 33 kann auch auf der rechten Seite des Gehäuses 1 des Blaszylinders angeordnet sein und damit auf derselben Seite wie die Steuerventile 31 zu liegen kommen, wodurch der seitliche Platzbedarf der Blaseinheit noch weiter reduziert wird.

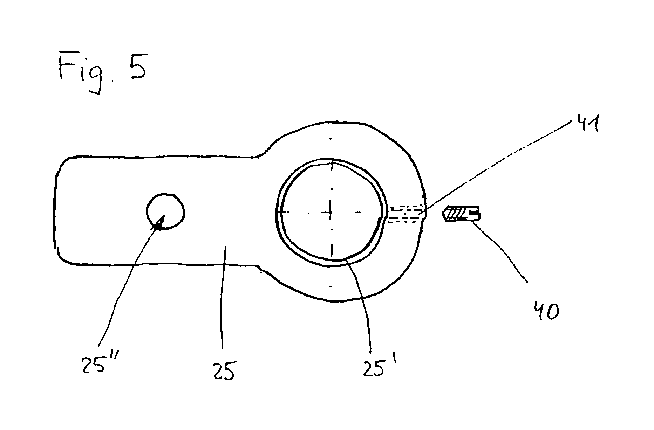

In Figur 5 ist nochmals detaillierter die Verbindungslasche 25 in der Aufsicht dargestellt. Im Bereich der Verbindung mit der Hohlwelle 2 weist die Verbindungslasche 25 einen geschlossenen Ring mit Innengewinde 25' auf, in welches das Aussengewinde 2' der Hohlwelle 2 eingeschraubt wird. Zur Verdrehsicherung der Schraubverbindung ist ferner eine Sicherungsschraube 40 vorgesehen, welche in ein radial zur Achse A der Hohlwelle 2 Schraubloch 41 eingeschraubt wird und gegen die Hohlwelle 2 in Anschlag gelangt oder dort in ein Sackloch eingreift und damit die Verschraubung verdrehsicher fixiert. Weiter ist in der Figur 5 die Ausnehmung 25" zur Aufnahme des Bolzens 26 zu sehen, welche beispielsweise ebenfalls mit einem Innengewinde ausgestattet sein kann.

## Patentansprüche

1. Vorrichtung zum Einblasen von Druckluft in einen Formling mit einem Blaszylinder, mit innerhalb des Gehäuses (1) des Blaszylinders entlang seiner Längsachse (A) verschiebbar angeordneter Hohlwelle (2), dessen eines Ende aus dem Gehäuse (1) herausragt und mit einem Anschlusskopf (7) zur dichten Verbindung mit dem Formling versehen ist, mit einer koaxial zur Hohlwelle (2) im Innern der Hohlwelle (2) angeordnetem und koaxial zur Hohlwelle (2) verschiebbaren Streckdorn (3), wobei ein Doppelkolben (21;22) achsparallel zur Hohlwelle (2) angeordnet ist, welcher mit einer Verbindungslasche (25) mit der Hohlwelle (2) verbunden ist und diese damit entlang ihrer Längsachse (A) zwischen einer untern und oberen Endposition bewegt, **dadurch gekennzeichnet, dass** die Wirkflächen der Doppelkolben (21;22) jeweils in einer mit einer separaten Steuerleitung verbundenen Steuerkammer (23;24) angeordnet sind, welche im Gehäuse (1) des Blaszylinders ausgebildet sind.

2. Vorrichtung nach Anspruch 1, **dadurch gekennzeichnet, dass** der Doppelkolben (21;22) aus zwei einzelnen Kolben mit jeweils einer Steuerfläche gebildet ist und die gegenüberliegende Seite jeweils mit der Verbindungslasche (25) verbunden ist oder in Kontakt steht.

3. Vorrichtung nach Anspruch 1 oder 2, **dadurch gekennzeichnet, dass** der Doppelkolben resp. die einzelnen Kolben (21;22) mindestens teilweise aus Kunststoff bestehen, vorzugsweise vollständig aus Kunststoff bestehen.

4. Vorrichtung nach einem der Ansprüche 1 bis 3, **dadurch gekennzeichnet, dass** die Verbindungslasche (25) einteilig form- und kraftschlüssig mit der Hohlwelle (2) und/oder dem Doppellkolben resp. den Kolben (21;22) verbunden ist.

5. Vorrichtung nach einem der Ansprüche 1 bis 4, **dadurch gekennzeichnet, dass** die Verbindungslasche (25) als gerades Bauteil ausgebildet ist und die Hohlwelle (2) vollumfänglich umfasst, wobei die Hohlwelle (2) zur Aufnahme der Verbindungslasche (25) ein Aussengewinde (2') aufweist.

6. Vorrichtung nach einem der Ansprüche 1 bis 5, **dadurch gekennzeichnet, dass** im Blaszylinder ein Stossdämpfer (28) angeordnet ist, welcher gegen die Verbindungslasche (25) in Anschlag gelangt.

7. Vorrichtung nach Anspruch 6, **dadurch gekennzeichnet, dass** der Stossdämpfer (28) derart angeordnet und ausgelegt ist, dass er erst nach einer Teilhubbewegung der Hohlwelle (2) aus der oberen Endposition gegen ihre untere Endposition innerhalb des Blaszylinders gegen die Verbindungslasche (25) in Anschlag gelangt.

8. Vorrichtung nach einem der Ansprüche 1 bis 7, **dadurch gekennzeichnet, dass** dies Verbindungslasche (25) mit einem achsparallel zur Längsachse (A) der Hohlwelle (2) geführten Bolzen (26) verbunden ist.

9. Vorrichtung nach einem der Ansprüche 1 bis 8, **dadurch gekennzeichnet, dass** das Gehäuse (1) des Blaszylinders einen rechteckigen Querschnitt aufweist.

10. Blaseinheit mit einer Vorrichtung nach Anspruch 9 mit einem unmittelbar an einer längeren Qüerschnittsseite seitlich angeordneten Blasblock (30) und in die Stirnseite des Blasblockes (30) mündender Speiseleitung (32), unmittelbar benachbart zur kürzeren Querschnittsseite des Blaszylinders im Bereich der Hohlwelle (2) resp. des Streckdorns (3).

11. Blaseinheit nach Anspruch 10, **dadurch gekennzeichnet, dass** ein Sparventil entweder seitlich am Blasblock (30) oder seitlich am Gehäuse (1) des Blaszylinders angeordnet ist.

## Claims

1. A device for injecting compressed air into a blank using a blowing cylinder, having a hollow shaft (2), which is situated so it is displaceable inside the housing (1) of the blowing cylinder along its longitudinal axis (A), one end of which protrudes from the housing (1) and is provided with a connecting head (7) for the sealed connection to the blank, having an expander mandrel (3), which is situated coaxially to the hollow shaft (2) in the interior of the hollow shaft (2) and is displaceable coaxially to the hollow shaft (2), a double piston (21; 22) being situated axially-parallel to the hollow shaft (2), which is connected using a connecting tab (25) to the hollow shaft (2) and thus moves it along its longitudinal axis (A) between a lower and an upper end position, **characterized in that** the active surfaces of the double piston (21; 22) are each situated in control chambers (23; 24), which are connected to separate control lines, and which are implemented in the housing (1) of the blowing cylinder.

2. The device according to Claim 1, **characterized in that** the double piston (21; 22) is formed from two single pistons, each having a control surface, and the opposing side is connected or is in contact in each case to the connecting tab (25).

3. The device according to Claim 1 or 2, **characterized in that** the double piston or the single pistons (21; 22), respectively, at least partially consist of plastic, preferably completely consist of plastic.

4. The device according to one of Claims 1 to 3, **characterized in that** the connecting tab (25) is integrally connected in a formfitting and/or friction-locked manner to the hollow shaft (2) and/or the double piston or the pistons (21; 22), respectively.

5. The device according to one of Claims 1 to 4, **characterized in that** the connecting tab (25) is implemented as a linear component and encompasses the hollow shaft (2) over its entire circumference, the hollow shaft (2) having an external thread (2') to receive the connecting tab (25).

6. The device according to one of Claims 1 to 5, **characterized in that** a shock absorber (28), which stops against the connecting tab (25), is situated in the blowing cylinder.

7. The device according to Claim 6, **characterized in that** the shock absorber (28) is situated and designed in such a way that it first stops against the connecting tab (25) after a partial stroke movement of the hollow shaft (2) from the upper end position toward its lower end position within the blowing cylinder.

8. The device according to one of Claims 1 to 7, **characterized in that** the connecting tab (25) is connected to a bolt (26) which is guided axially-parallel to the longitudinal axis (A) of the hollow shaft (2).

9. The device according to one of Claims 1 to 8, **characterized in that** the housing (1) of the blowing cylinder has a rectangular cross-section.

10. A blowing unit having a device according to Claim 9 having a blowing block (30), which is laterally situated directly on a longer cross-sectional side, and a feed line (32), opening into the front side of the blowing block (30), directly adjacent to the shorter cross-sectional side of the blowing cylinder in the area of the hollow shaft (2) or the expanding mandrel (3), respectively.

11. The blowing unit according to Claim 10, **characterized in that** a conserving valve is either situated laterally on the blowing block (30) or laterally on the housing (1) of the blowing cylinder.

## Revendications

1. Dispositif pour insuffler de l'air comprimé dans une préforme comprenant un cylindre de soufflage, un arbre creux (2) disposé à l'intérieur du boîtier (1) du cylindre de soufflage de façon coulissante le long de son axe longitudinal (A), cylindre dont une extrémité dépasse du boîtier (1) et est dotée d'une tête de raccordement (7) pour la liaison étanche avec la préforme, un mandrin d'allongement (3) disposé de façon coaxiale par rapport à l'arbre creux (2) à l'intérieur de l'arbre creux (2) et coulissant de façon coaxiale par rapport à l'arbre creux (2), un piston double (21 ; 22) étant disposé de façon parallèle à l'arbre creux (2), lequel piston est relié par une patte de liaison (25) à l'arbre creux (2) et déplace ainsi cet arbre le long de son axe longitudinal (A) entre une position extrême inférieure et une position extrême supérieure, **caractérisé en ce que** les surfaces actives des doubles pistons (21 ; 22) sont disposées respectivement dans une chambre de commande (23 ; 24) reliée à une conduite de commande séparée, lesquelles chambres sont conçues dans le boîtier (1) du cylindre de soufflage.

2. Dispositif selon la revendication 1, **caractérisé en ce que** le double piston (21 ; 22) est formé de deux pistons individuels dotés chacun d'une surface de commande et le côté opposé est relié ou est en contact avec la patte de liaison (25).

3. Dispositif selon la revendication 1 ou 2, **caractérisé en ce que** le double piston et/ou les pistons individuels (21 ; 22) sont au moins en partie en matière synthétique, de préférence complètement en matière synthétique.

4. Dispositif selon l'une quelconque des revendications 1 à 3, **caractérisé en ce que** la patte de liaison (25) est formée d'une seule pièce par complémentarité de formes et adhérence à l'arbre creux (2) et/ou le double piston et/ou le piston (21 ; 22).

5. Dispositif selon l'une quelconque des revendications 1 à 4, **caractérisé en ce que** la patte de liaison (25) est conçue sous forme de composant droit et inclut l'arbre creux (2) sur tout le pourtour, l'arbre creux (2) présentant un filetage extérieur (2') pour le logement de la patte de liaison (25).

6. Dispositif selon l'une quelconque des revendications 1 à 5, **caractérisé en ce qu'**un amortisseur (28), qui vient en butée contre la patte de liaison (25), est disposé dans le cylindre de soufflage.

7. Dispositif selon la revendication 6, **caractérisé en ce que** l'amortisseur (28) est disposé et conçu de telle sorte qu'il ne vient en butée contre la patte de liaison (25) qu'après un mouvement de course partielle de l'arbre creux (2) à partir de la position extrême supérieure vers sa position extrême inférieure à l'intérieur du cylindre de soufflage.

8. Dispositif selon l'une quelconque des revendications 1 à 7, **caractérisé en ce que** la patte de liaison (25) est reliée à un boulon (26) guidé parallèlement à l'axe longitudinal (A) de l'arbre creux (2).

9. Dispositif selon l'une quelconque des revendications 1 à 8, **caractérisé en ce que** le boîtier (1) du cylindre de soufflage présente une section rectangulaire.

10. Unité de soufflage doté d'un dispositif selon la revendication 9 avec un bloc de soufflage (30) disposé latéralement directement sur un côté de section plus long et d'une conduite d'alimentation (32) débouchant dans le côté avant du bloc de soufflage (30), directement voisin du côté de section plus court du cylindre de soufflage dans la zone de l'arbre creux (2) et/ou du mandrin d'allongement (3).

11. Unité de soufflage selon la revendication 10, **caractérisée en ce qu'**une vanne d'économie est disposée soit sur le côté du bloc de soufflage (30) soit sur le côté du boîtier (1) du cylindre de soufflage.
